(19) **Europäisches Patentamt European Patent Office Office européen des brevets**

(11) **EP 2 005 290 B1**

(12) **FASCICULE DE BREVET EUROPEEN**

(45) Date de publication et mention de la délivrance du brevet:
**29.12.2010 Bulletin 2010/52**

(51) Int Cl.:
***G06F 7/58*** (2006.01)

(21) Numéro de dépôt: **07731856.6**

(22) Date de dépôt: **02.04.2007**

(86) Numéro de dépôt international:
**PCT/FR2007/051052**

(87) Numéro de publication internationale:
**WO 2007/116171 (18.10.2007 Gazette 2007/42)**

(54) **PROCEDE ET DISPOSITIF POUR ENGENDRER UNE SUITE PSEUDO-ALEATOIRE**

VERFAHREN UND EINRICHTUNG ZUM ERZEUGEN EINER PSEUDOZUFALLSZEICHENKETTE

METHOD AND DEVICE FOR GENERATING A PSEUDORANDOM STRING

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **10.04.2006 FR 0651292**

(43) Date de publication de la demande:
**24.12.2008 Bulletin 2008/52**

(73) Titulaire: **FRANCE TELECOM
75015 Paris (FR)**

(72) Inventeurs:
- **BILLET, Olivier
  F-06140 Tourrettes Sur Loup (FR)**
- **GILBERT, Henri
  F-91140 Bures Sur Yvette (FR)**
- **BERBAIN, Côme
  F-92120 Montrouge (FR)**

(56) Documents cités:
- **L'ECUYER P: "A Tutorial On Uniform Variate Generation" PROCEEDINGS OF THE 1989 WINTER SIMULATION CONFERENCE, 4 décembre 1989 (1989-12-04), pages 40-49, XP010305739**
- **TSUTOMU MATSUMOTO ET AL: "PUBLIC QUADRATIC POLYNOMIAL-TUPLES FOR EFFICIENT SIGNATURE-VERIFICATION AND MESSAGE-ENCRYPTION" ADVANCES IN CRYPTOLOGY- EUROCRYPT. INTERNATIONAL CONFERENCE ON THE THEORY AND APPLICATION OF CRYPTOGRAPHIC TECHNIQUES, SPRINGER VERLAG, DE, 25 mai 1988 (1988-05-25), pages 419-453, XP000568374**
- **KNUTH D E ED - KNUTH D E: "GENERATING UNIFORM RANDOM NUMBERS" SEMINUMERICAL ALGORITHMS. PHOTOCOPIED REPLACEMENT OF MISSING ORIGINAL, ART OF COMPUTER PROGRAMMING, READING, ADDISON WESLEY, US, vol. VOL. 2, 1980, pages 9-37,ABSTRNO, XP009051297**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne la production de suites pseudo-aléatoires de symboles appartenant à un alphabet donné. De telles suites sont notamment utilisées dans certaines procédures cryptographiques.

On appelle suite pseudo-aléatoire une suite qui, bien que produite de manière déterministe, soit impossible à distinguer, du moins en un temps "raisonnable", d'une suite de symboles dans laquelle chaque symbole serait choisi parfaitement au hasard dans l'alphabet (la signification de ce qu'on entend par un temps "raisonnable" est évidemment liée à l'application visée et à la puissance de calcul disponible). En pratique, on produit habituellement une suite pseudo-aléatoire en initialisant un algorithme approprié au moyen d'un paramètre secret (appelé, selon le contexte, "graine" ou "clé"), et le cas échéant d'un paramètre additionnel, secret ou non, appelé "vecteur d'initialisation".

L'alphabet mentionné ci-dessus peut, par exemple, être l'ensemble binaire {0,1}, ou l'ensemble des chiffres de 0 à 9, ou encore l'ensemble alphanumérique comprenant les chiffres et les lettres majuscules et minuscules. Dans le cadre de la présente invention, on supposera seulement que les symboles de l'alphabet appartiennent à un corps fini (ou "corps de Galois" GF($q$)) $K$ de cardinal $q \geq 2$.

Une application importante des suites pseudo-aléatoires est le "chiffrement à flot". Cette technique permet de chiffrer (au sens de la cryptographie) une suite de données en clair $\{x_i\}$ (indexées par $i$), à valeurs dans l'alphabet, au moyen d'une autre suite $\{z_i\}$ à valeurs dans le même alphabet, où $\{z_i\}$ est, justement, la suite produite par un générateur pseudo-aléatoire, pour obtenir une suite chiffrée $\{y_i\}$, également à valeurs dans l'alphabet. Autrement dit, on fait le choix d'une loi de composition interne $y_i = x_i * z_i$ dans l'alphabet ; par exemple, cette loi interne peut être le "OU exclusif" lorsque l'alphabet est l'alphabet binaire {0,1}. Le chiffrement à flot est également appelé chiffrement "à la volée" en raison du fait que les données y sont chiffrées une par une -- par opposition aux méthodes de chiffrement faisant intervenir des *blocs* de données. Le chiffrement à flot présente, par rapport au chiffrement par blocs, l'avantage de réduire les problèmes de délai de transmission et de stockage des données, mais il requiert évidemment un débit de symboles pseudo-aléatoires au moins aussi élevé que le débit de données en clair ; l'application au chiffrement à flot est donc réservée aux générateurs de suites pseudo-aléatoires relativement rapides.

Le chiffrement à flot est notamment mis en oeuvre dans le protocole de protection des échanges sur Internet appelé "TLS" (initiales des mots anglais *Transport Layer Security*", cf. l'article de T. Dierks, et C. Allen intitulé "The TLS Protoco/, version 1.0, RFC 2246", janvier 1999), dont l'un des algorithmes de chiffrement à flot les plus utilisés est l'algorithme "RC4" (cf. l'article de J.D. Golic intitulé "Linear Statistical Weakness of Alleged RC4 Keystream Generator", Actes de "Advances in Cryptology - EUROCRYPT '97", pages 226 à 238, éditeur W. Fumy, Lecture Notes in Computer Science vol. 1233, Springer-Verlag), et dans le chiffrement du trafic et de la signalisation sur la voie radio dans le système "GSM", au moyen d'algorithmes dont le plus répandu est l'algorithme "A5/1" (cf. l'article de A. Biryukov, A. Shamir et D. Wagner intitulé "Real Time Cryptanalysis of A5/1 on a PC", Actes de "FSE 2000", pages 1 à 18, éditeur B. Schneier, Springer Verlag 2000).

Il existe d'autres applications importantes des suites pseudo-aléatoires, par exemple dans les calculs stochastiques et dans les protocoles cryptographiques d'authentification à clé publique.

Beaucoup d'algorithmes à flot actuels, par exemple l'algorithme A5/1 mentionné ci-dessus, utilisent des suites récurrentes linéaires produites par des registres à rétroaction linéaire, éventuellement combinées à l'aide de fonctions non linéaires (cf. l'article de A. Canteaut intitulé "Le chiffrement à la volée", dossier hors-série du magazine "Pour la Science", pages 86 et 87, Paris, juillet-octobre 2002). Ces algorithmes peuvent être mis en oeuvre dans des générateurs de suite pseudo-aléatoire rapides, mais leur sécurité est sujette à caution, faute d'arguments de sécurité forts sur lesquels on puisse fonder une grande confiance dans l'impossibilité pratique de distinguer les suites pseudo-aléatoires produites de suites parfaitement aléatoires.

La demande de brevet français n° 05 06041 divulgue un générateur de suite pseudo-aléatoire de termes appartenant à un corps fini $K$ de cardinal $q \geq 2$ destinés à être utilisés dans une procédure cryptographique. Ce générateur possède des moyens pour calculer itérativement, à partir d'un $n$-uplet d'initialisation $X^{(0)} = (X^{(0)}_1, X^{(0)}_2, ..., X^{(0)}_n)$ d'éléments de $K$, des $n$ - uplets $X^{(i)} = (X^{(i)}_1, X^{(i)}_2, ..., X^{(i)}_n)$ d'éléments de $K$ (où $i = 1,2,...$), chaque n-uplet $X^{(i)}$ résultant de manière prédéterminée au moins d'un $m$ -uplet $Y^{(i)} = (Y^{(i)}_1, Y^{(i)}_2, ..., Y^{(i)}_m)$ d'éléments de $K$ et les termes de ladite suite pseudo-aléatoire étant extraits de manière prédéterminée des $n$-uplets $X^{(i)}$ et/ou des $m$-uplets $Y^{(i)}$. Ce générateur est remarquable en ce qu'il comprend en outre des moyens pour obtenir, pour au moins une valeur de $i$, au moins une composante $Y^{(i)}_k$ (où $k = 1,2,..., m$) du $m$ -uplet $Y^{(i)}$ en appliquant une forme quadratique prédéterminée, à coefficients dans $K$, aux composantes du $n$ -uplet $X^{(i-1)}$.

Ce générateur pseudo-aléatoire utilise un algorithme offrant un niveau de sécurité élevé, qui résulte de la difficulté du problème consistant à résoudre un système d'équations quadratiques sur un corps fini. On peut montrer en effet (sous réserve de la vérification de la conjecture dite "P $\neq$ NP", communément admise, de la "théorie de la complexité"), que, quel que soit le corps fini $K$ considéré, la résolution de ce problème requiert un temps plus que polynomial, même si la vérification qu'un candidat donné est ou n'est pas solution de ce système d'équations peut, elle, être effectuée en un temps polynomial (un tel problème est appelé "NP-dur"). De plus, même pour des tailles assez modestes de $m$ et de $n$ (par exemple pour $K$ = GF(2) et $m$ et $n$ supérieurs ou égaux à 100), on ne connaît actuellement, dans le cas où les valeurs de $m$ et $n$ sont suffisamment voisines l'une de l'autre, aucune méthode de résolution efficace d'instances aléatoires de ce problème.

Cela étant, la question se pose de savoir si un générateur pseudo-aléatoire selon la demande française n° 05 06041 peut être suffisamment efficace, c'est-à-dire requérir des ressources de calcul (temps, mémoire, et ainsi de suite) par symbole de la suite produite suffisamment faibles (du moins pour des valeurs de paramètres modérées mais suffisamment grandes pour que le problème que l'on vient de mentionner puisse toujours être considéré comme difficile) pour que l'on puisse envisager l'utilisation d'un tel générateur sur le plan industriel.

Cette question des ressources de calcul requises concerne notamment la possibilité d'intégrer un générateur pseudo-aléatoire de ce type dans des systèmes électroniques à bas coût, tels que les puces à logique câblée. On rappelle à cet égard que les circuits électroniques à logique câblée sont composés de "portes logiques" réalisées à partir de transistors (il est possible de concevoir toutes les fonctions logiques d'un programme à partir de portes logiques de deux types, l'un appelé "nand" et l'autre appelé "nor"). Le nombre de portes logiques requises pour implanter un circuit logique reflète donc notamment la taille du circuit, sa consommation en courant, et son coût.

Examinons donc de plus près les calculs mis en oeuvre dans le générateur pseudo-aléatoire selon la demande française n° 05 06041.

Le générateur appelle de manière itérative une (ou des) forme(s) quadratique(s) associant, à l'itération n°$i$, au moins une variable $Y^{(i)}_k$ (où $k$ =1,2,..., $m$) à $n$ variables $X^{(i-1)}_j$ (où $j$ = 1,2,..., $n$ ). Cette association consiste donc en une certaine fonction "$G$", qui, à un $n$ -uplet $X = (x_1, x_2,..., x_n)$ de valeurs d'entrée, associe le $m$-uplet $Y = (y_1, y_2,..., y_m)$ de valeurs de sortie. Cette fonction $G$ correspond donc à un système ($G$) de $m$ polynômes quadratiques multivariés (c'est-à-dire à $n$ variables $x_l$ à $x_n$, avec $n > 1$) sur un corps fini $K$. Ces polynômes sont donc de la forme

$$\sum_{1 \leq i \leq j \leq n} \alpha_k^{(ij)} x_i x_j + \sum_{1 \leq j \leq n} \beta_k^{(j)} x_j + \gamma_k = y_k \qquad (1 \leq k \leq m) \, ,$$

où les coefficients $\alpha_k^{(ij)}$, $\beta_k^{(j)}$ et $\gamma_k$ appartiennent à $K$, et où les quantités $y_k$ appartiennent également à $K$.

De manière classique, pour mettre en oeuvre un tel générateur, on stockerait dans une mémoire la valeur de ces coefficients, et on calculerait la valeur des $m$ polynômes à chaque itération. Il faudrait donc mémoriser un nombre total de coefficients égal à $m \cdot N$. où $N$ désigne le nombre de termes par polynôme. On vérifie aisément que, pour un polynôme quadratique à $n$ variables, ce nombre $N$ de termes est égal à

$$N = 1 + \frac{n(n+1)}{2} \, .$$

Par ailleurs, pour que la résolution d'un système de $m$ équations quadratiques à $n$ inconnues sur $K$ puisse être considérée comme difficile, il est souhaitable que les valeurs de $m$ et $n$ soient suffisamment grandes, et que leurs ordres de grandeur soient suffisamment voisins l'un de l'autre. Ainsi, pour de grandes valeurs de $n$, et pour $m$ de l'ordre de $n$, on voit que le nombre de coefficients à mémoriser est de l'ordre de $n^3$. Par exemple, pour $n \approx 100$, il faut mémoriser environ un million de coefficients.

Il en résulte que la réalisation classique d'un générateur pseudo-aléatoire selon la demande française n° 05 06041 requiert un nombre de portes électroniques beaucoup trop élevé pour qu'on puisse envisager de l'insérer dans une puce à logique câblée. Il va de soi que l'on pourrait encore moins envisager d'insérer dans une puce à logique câblée un générateur pseudo-aléatoire utilisant un système de polynômes multivariés dont certains sont de degré global supérieur à 2, alors que l'élévation du degré des polynômes permettrait avantageusement d'accroître la sécurité du générateur en contrepartie d'un accroissement modeste des ressources de calcul.

Le document « A Tutorial On Uniform Variate Generation », P.L'Ecuyer, Proceedings of the 1989 Winter Simulation Conference, 4 décembre 1989 (1989-12-04), pages 40-49 présente plusieurs types de générateurs pseudo-aléatoires. Le document « Public Quadratic Polynomialtuples for Efficient Signature-Verification and Message-Encryption », de Tsutomu Matsumoto et Al., Advances in Cryptology- Eurocrypt International Conference on the Theory and Application of Cryptographyc Techniques, Springer Verlag, DE, 25 mai 1988, pages 419-453 décrit un crypto-système assymétrique qui utilise des équations quadratiques. Cependant la génération des coefficients de polynômes nécessite d'importantes ressource. Le document « Generating Uniform Random Numbers », de Knuth D.E, Seminumerical Algorithms, Art of Computer Programming, Reading, Addison Wesley, US, Vol.2, 1980, pages 9-37, traite de générateurs de nombre à congruences linéaires et étend le cas linéaire au cas quadratique. Ici encore, d'importantes ressources sont nécessaires pour générer les coefficents des équations quadratiques. Ainsi, les générateurs pseudo-aléatoires décrits dans ces documents ne sont pas adaptés pour être insérés dans des puces à logique câblée.

La présente invention concerne donc un générateur de suite pseudo-aléatoire de termes appartenant à un corps fini $K$ de cardinal $q \geq 2$ destinés à être utilisés dans une procédure cryptographique, ledit générateur ayant des moyens pour calculer itérativement un système ($\Gamma$) de $m$ polynômes à $n$ variables appartenant à un corps fini $K$. Ce générateur de suite pseudo-aléatoire est remarquable en ce que les coefficients des $m$ polynômes sont régénérés à chaque itération.

Ainsi, selon l'invention, les coefficients des polynômes sont générés (par exemple, recalculés) à chaque itération à partir d'un petit nombre de paramètres, de sorte que la taille de mémoire requise pour faire fonctionner le générateur selon l'invention est très modeste.

En effet, les auteurs de la présente invention ont réalisé que, contrairement à ce que l'on pourrait penser naïvement, la charge de calcul supplémentaire impliquée par l'invention grève peu le temps de calcul total. Comme le temps de calcul pour des polynômes de degré assez important (même s'ils sont nombreux et fonction de nombreuses variables) est, comme il est bien connu, assez court, on obtient grâce à l'invention un générateur pseudo-aléatoire à la fois rapide (par exemple utilisable pour le chiffrement à flot) et bien adapté pour des dispositifs de calcul à bas coût, ces avantages s'ajoutant à la sécurité élevée mentionnée ci-dessus.

Dans le cas où l'on vise surtout une grande rapidité, on ne prendra avantageusement que des polynômes de degré au plus égal à deux.

Selon des caractéristiques particulières, le générateur de suite pseudo-aléatoire comprend un module de génération des coefficients réalisé sous la forme d'un registre à décalage linéaire.

Selon des caractéristiques particulières, le générateur de suite pseudo-aléatoire comprend un module de génération des coefficients réalisé sous la forme d'un registre à décalage linéaire.

En variante, on pourra réaliser ce module de génération des coefficients sous la forme d'un registre à décalage non linéaire, ou sous la forme d'une machine à états finis.

Grâce à ces dispositions, on peut engendrer un grand nombre de coefficients à l'aide d'une mémoire électronique de petite taille.

Selon des caractéristiques particulières, pour calculer le $m$-uplet de valeurs $(y_1, y_2, ..., y_m)$ prises, pour un $n$-uplet de variables $(x_1, x_2, ..., x_n)$ donné, par les $m$ polynômes d'un système ($\Gamma$) dans lequel ces polynômes sont tous de degré global inférieur ou égal à $D$, le générateur comprend des moyens pour :

- choisir un ordre de traitement pour un ensemble choisi de termes du polynôme général à $n$ variables de degré $D$,

- pour les termes traités, calculer, en respectant ledit ordre, le monôme dû aux variables, puis, successivement pour les $m$ polynômes, engendrer le coefficient de ce terme et multiplier ce coefficient par ledit monôme pour obtenir la valeur dudit terme.

Grâce à ces dispositions, chaque facteur dû aux variables n'est calculé qu'une fois au lieu de $m$ fois.

Corrélativement, l'invention concerne un procédé pour engendrer une suite pseudo-aléatoire de termes appartenant à un corps fini $K$ de cardinal $q \geq 2$ destinés à être utilisés dans une procédure cryptographique, ledit procédé comprenant le calcul itératif d'un système ($\Gamma$) de $m$ polynômes à $n$. variables appartenant à un corps fini $K$. Ce procédé pour engendrer une suite pseudo-aléatoire est remarquable en ce que les coefficients des $m$ polynômes sont régénérés à chaque itération.

Selon des caractéristiques particulières, chacun de ces $m$ polynômes est de degré au plus égal à deux.

Selon des caractéristiques particulières, pour calculer le $m$-uplet de valeurs $(y_1, y_2, ..., y_m)$ prises, pour un $n$-uplet de variables $(x_1, x_2, ..., x_n)$ donné, par les $m$ polynômes d'un système ($\Gamma$) dans lequel ces polynômes sont tous de degré global inférieur ou égal à $D$, il comprend les étapes suivantes :

- on choisit un ordre de traitement pour un ensemble choisi de termes du polynôme général à $n$ variables de degré $D$,

- pour les termes traités, on calcule, en respectant ledit ordre, le monôme dû aux variables, puis, successivement pour les $m$ polynômes, on engendre le coefficient de ce terme et on multiplie ce coefficient par ledit monôme pour obtenir la valeur dudit terme.

Les avantages offerts par ces procédés sont essentiellement les mêmes que ceux offerts par les générateurs de suite pseudo-aléatoire corrélatifs succinctement exposés ci-dessus.

L'invention vise également :

- un circuit électronique, et notamment une puce à logique câblée, comprenant l'un quelconque des générateurs de suite pseudo-aléatoire succinctement exposés ci-dessus,

- un moyen de stockage de données inamovible comportant des instructions de code de programme informatique pour l'exécution des étapes de l'un quelconque des procédés pour engendrer une suite pseudo-aléatoire succinctement exposés ci-dessus,

- un moyen de stockage de données partiellement ou totalement amovible, comportant des instructions de code de programme informatique pour l'exécution des étapes de l'un quelconque des procédés pour engendrer une suite pseudo-aléatoire succinctement exposés ci-dessus, et

- un programme d'ordinateur contenant des instructions telles que, lorsque ledit programme commande un dispositif de traitement de données programmable, lesdites instructions font que ledit dispositif de traitement de données met en oeuvre l'un quelconque des procédés pour engendrer une suite pseudo-aléatoire succinctement exposés ci-dessus.

Les avantages offerts par ce circuit électronique, ces moyens de stockage de données et ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux dessins qui l'accompagnent, dans lesquels :

- la figure 1 est un schéma synoptique illustrant un mode de réalisation du procédé pour engendrer une suite pseudo-aléatoire selon l'invention, et

- la figure 2 est un schéma synoptique illustrant un mode de réalisation du générateur pseudo-aléatoire selon l'invention.

Comme expliqué ci-dessus, la sécurité du générateur de suite pseudo-aléatoire selon la présente invention (c'est-à-dire l'impossibilité pour un "attaquant" de calculer le $(i+1)^{\text{ième}}$ terme de la suite en sortie à partir des $i$ premiers termes) repose sur la difficulté du problème de la résolution de $m$ équations à $n$ inconnues sur un corps fini $K$.

Selon un mode de réalisation, ces équations peuvent toutes être choisies quadratiques comme dans la demande française n° 05 06041 (par souci de simplicité de langage, on utilise l'expression d'équations, respectivement de polynômes, "quadratiques", même dans le cas où certaines de ces équations, respectivement certains de ces polynômes, sont linéaires -- étant entendu qu'au moins une équation, respectivement au moins un polynôme, du système est effectivement de degré deux). Ce problème peut être formulé de manière précise de la façon suivante :

étant donné un système ($\Gamma$) de $m$ équations quadratiques à $n$ inconnues $x_1$ à $x_n$ appartenant à un corps fini $K$, de la forme

$$\sum_{1 \leq i \leq j \leq n} \alpha_k^{(ij)} x_i x_j + \sum_{1 \leq j \leq n} \beta_k^{(j)} x_j + \gamma_k = y_k \qquad (1 \leq k \leq m),$$

où les coefficients $\alpha_k^{(ij)}$, $\beta_k^{(j)}$ et $\gamma_k$ appartiennent à $K$, et où les quantités $y_k$ appartiennent également à $K$,

trouver une solution $X = (x_1, x_2, .., x_n)$.

On désigne par "$\Gamma$" la fonction, décrite par le système d'équations ($\Gamma$), qui à un $n$-uplet $X = (x_1, x_2, ..., x_n)$ de valeurs d'entrée associe le $m$-uplet $Y = (y_1, y_2, ..., y_m)$ de valeurs de sortie.

Le générateur pseudo-aléatoire appelle de manière itérative une (ou des) forme(s) quadratique(s) associant au moins une variable $Y^{(i)}_k$ (où $k = 1, 2, ..., m$) à $n$ variables $X^{(i-1)}_j$ (où $j = 1, 2, ..., n$). Comme expliqué ci-dessus, les paramètres $q$, $m$ et $n$ sont de préférence choisis de façon à ce que :

- la résolution d'un système de $m$ équations quadratiques à $n$ inconnues sur $K$ puisse être considérée comme difficile, ce qui nécessite que les valeurs de $m$ et $n$ soient suffisamment grandes, et que leurs ordres de grandeur soient suffisamment voisins l'un de l'autre (on pourra par exemple prendre $q^n$ et $q^m$ tous deux entre $2^{80}$ et $2^{400}$), et

- les calculs puissent être effectués efficacement, ce qui nécessite que les valeurs de $q$, $m$ et $n$ soient suffisamment petites (on pourra par exemple prendre $q$ inférieur à une centaine, avec $m$ et $n$ inférieurs à quelques centaines).

En outre, conformément à l'invention, on régénère à chaque itération (par exemple en les recalculant) les coefficients de ces formes quadratiques.

Il est clair que, plus grand sera le nombre de coefficients nuls, et plus rapides seront ces calculs ; il faudra toutefois veiller à ce qu'un nombre suffisant de coefficients de termes quadratiques (désignés par $\alpha_k^{(ij)}$ ci-dessus) soient non-nuls pour que la résolution du système d'équations soit impossible en pratique ; au cas où, pour gagner en vitesse d'exécution, on permet que certaines équations (mais pas toutes évidemment) soient linéaires par rapport à toutes les variables, il est recommandé de garder secret le mode de génération des coefficients, afin de compenser le fait que la résolution du système d'équations en est (en théorie) facilitée.

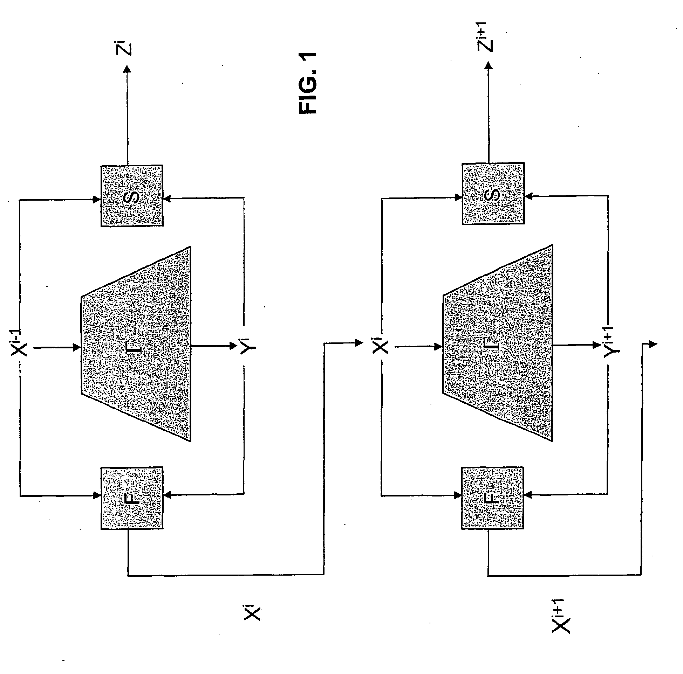

Le mode de réalisation corrélatif du procédé pour engendrer une suite pseudo-aléatoire selon l'invention est illustré sur la **figure 1.** Dans ce mode de réalisation, on calcule, pour chaque valeur de $i$, toutes les composantes du $m$-uplet $Y^{(i)}$ en appliquant des formes quadratiques à coefficients dans $K$ aux composantes du $n$-uplet $X^{(i-1)}$.

En premier lieu, au cours d'une étape d'initialisation, on constitue un $n$-uplet $X^{(0)}$. Selon l'utilisation prévue pour le générateur, $X^{(0)}$ pourra dépendre soit d'une graine publique, soit d'une clé secrète, soit d'un vecteur d'initialisation, soit d'une combinaison de plusieurs de ces éléments ; un vecteur d'initialisation est un paramètre additionnel, généralement non secret, qui permet d'utiliser plusieurs fois la même clé secrète pour engendrer plusieurs suites pseudo-aléatoires distinctes.

On met ensuite en oeuvre des étapes itératives pour produire, à partir de l'état initial $X^{(0)}$ et selon la méthode décrite ci-dessous, une suite pseudo-aléatoire $Z^{(i)}$ (où $i$ = 1,2 ...) constituée de $t$-uplets d'éléments de $K$, où t est une constante comprise entre 1 et $m$. Le nombre total d'itérations pourra par exemple être compris entre 1 et $2^{50}$.

A l'itération n°$i$, un état courant $X^{(i-1)}$ constitué d'un $n$-uplet d'éléments de $K$ est pris comme valeur d'entrée pour mettre en oeuvre les sous-étapes suivantes :

1) un $m$-uplet $Y^{(i)}$ de valeurs de $K$ est déduit de $X^{(i)}$ à l'aide de la fonction $\Gamma$ définie précédemment, i.e. $Y^{(i)} = \Gamma(X^{i-1})$,

2) une valeur de sortie $Z^{(i)}$ est obtenue en appliquant au couple $(X^{(i-1)}, Y^{(i)})$ une fonction de sortie S choisie, i.e. $Z^{(i)} = S(X^{(i-1)}, Y^{(i)})$, et

3) un nouvel état courant $X^{(i)}$, constitué d'un $n$-uplet de valeurs de $K$, est obtenu en appliquant au couple $(X^{(i-1)}, Y^{(i)})$ une fonction de rétroaction $F$ choisie, i.e. $X(i) = F(X^{(i-1)}, Y^{(i)})$.

Ce procédé est illustré sur la figure 1 de manière séquentielle (deux itérations successives), mais il pourrait aussi bien être illustré de manière rebouclée. Le point important à noter ici est que les étapes successives de ce procédé peuvent être mises en oeuvre par un seul et même circuit électronique.

On se référera par ailleurs à la demande française n° 05 06041 pour des exemples de choix possibles pour la fonction de rétroaction $F$ et pour la fonction de sortie $S$ mentionnées ci-dessus. On se référera également à cette demande pour des exemples de moyens pour constituer, à partir d'au moins la suite $Z^{(i)}$, diverses suites pseudo-aléatoires de symboles (par exemple binaires) en sortie.

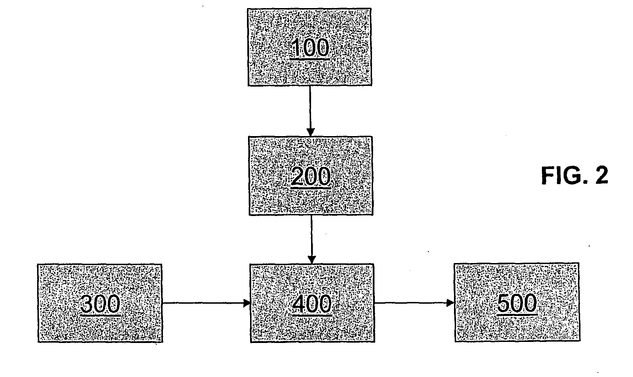

La **figure 2** illustre schématiquement un mode de réalisation du générateur de suite pseudo-aléatoire selon l'invention. Ce générateur comprend les modules suivants :

- une mémoire (100) destinée à contenir les valeurs des variables d'entrée du système de polynômes à calculer,

- une mémoire (500) destinée à contenir, au terme du calcul, la valeur prise par un ou plusieurs des polynômes à calculer, et destinée à servir simultanément d'unité de stockage des valeurs intermédiaires,

- un module (200) de génération (selon un ordre prédéterminé) des valeurs des différents monômes qui interviennent dans le système de polynômes à calculer, le module (200) de génération des monômes étant optionnellement muni d'une mémoire propre,

- un module (300) de génération de la séquence des coefficients décrivant le système de polynômes à calculer, le module (300) étant muni d'une mémoire propre, et

- un module (400) de combinaison destiné à la multiplication des coefficients et des valeurs des monômes, de manière à mettre à jour la mémoire (500) contenant les valeurs des polynômes.

On va décrire à présent un mode de réalisation particulièrement avantageux pour le module (300) de génération des coefficients mentionné ci-dessus.

On notera qu'il n'est nullement nécessaire, pour le bon fonctionnement du générateur pseudo-aléatoire selon l'invention, d'appliquer à chaque itération la même fonction Γ ; autrement dit, rien n'interdit que la valeur de chaque coefficient des *m* polynômes puisse varier d'une itération à une autre, si cela s'avère commode. Le présent mode de réalisation fait un usage astucieux de cette observation.

Selon une première variante, on réalise le module (300) de génération des coefficients sous la forme d'un registre à décalage linéaire LFSR (initiales des mots anglais, *"Linear Feedback Shift Register"*).

Un LFSR consiste en un ensemble de *l* mémoires $\alpha_1, \alpha_2, ..., \alpha_1$, rafraîchies à chaque coup d'horloge en remplaçant la valeur contenue dans chaque mémoire $\alpha_i$ par la valeur contenue dans la mémoire $\alpha_{i+1}$, sauf en ce qui concerne la valeur contenue dans la mémoire $\alpha_l$ qui est remplacée par une combinaison linéaire donnée des valeurs contenues dans diverses mémoires au coup d'horloge précédent.

Les bits en sortie des registres à décalage linéaire sont classiquement utilisés en tant que suites de bits pseudo-aléatoires. Selon la présente invention, les données en sortie du LFSR sont avantageusement utilisées non pas pour engendrer directement les valeurs de sortie $Z^{(i)}$, mais pour engendrer les coefficients des *m* polynômes. En effet, un LFSR produit une suite pseudo-aléatoire de longueur $(2^r - 1)$ à partir de seulement *r* bits en mémoire et avec un circuit électronique comportant un nombre de portes logiques seulement de l'ordre de *r*.

Par exemple, dans le cas d'un système d'équations (Γ) comprenant *m* = 80 polynômes multivariés en *n* = 80 variables sur le corps binaire GF(2), les $m \cdot N \approx 259200$ coefficients de ce système peuvent être engendrés à partir d'un registre linéaire à décalage de taille *r* = 18 bits au lieu des 259200 bits d'une réalisation naïve.

Selon une deuxième variante, on réalise le module (300) de génération des coefficients sous la forme d'un registre à décalage non linéaire NLFSR (initiales des mots anglais, *"Non-Linear Feedback Shift Register"*). Cela implique, par rapport à un décalage linéaire, un très léger surcoût en termes de nombre de portes électroniques, mais permet d'améliorer sensiblement le caractère aléatoire de la suite de termes produite par le générateur en sortie.

Selon une troisième variante, on réalise le module (300) de génération des coefficients sous la forme d'une machine à états finis comprenant :

- une mémoire mise à jour à chaque coup d'horloge,

- un circuit de mise à jour de cette mémoire, et

- un circuit d'expansion des données enregistrées dans cette mémoire.

Le terme "circuit d'expansion" désigne un circuit apte à engendrer un nombre *f* de bits à partir de *g* bits en mémoire, avec *f* > *g*. Par exemple, si *f* est un multiple de *h*, on peut diviser l'ensemble de *f* bits en sous-ensembles de *h* bits chacun, puis passer chacun de ces sous-ensembles de *h* bits à travers une série de mélangeurs différents, et enfin concaténer les séries de bits ainsi obtenues.

Dans une machine à états finis, on rafraîchit à chaque coup d'horloge toutes les valeurs mémoire (avant expansion), alors que dans un registre à décalage, on ne rafraîchit à chaque coup d'horloge qu'une seule valeur en mémoire. Une machine à états finis permet donc des calculs plus rapides qu'un registre à décalage, mais au prix d'un certain accroissement du nombre de portes électroniques.

Toutes ces diverses variantes permettent néanmoins d'engendrer à chaque itération les coefficients du système d'équations (Γ) de manière rapide, et au moyen d'un nombre faible de portes électroniques.

On peut également envisager divers modes de réalisation pour le module (200) de génération des valeurs de monômes. Pour simplifier la discussion, on ne considérera ici que le calcul de termes quadratiques (du type $x_i x_j$, où *i* et *j* varient de 1 à *n*).

La mise en oeuvre "naïve" consiste à considérer tous les couples de variables l'un après l'autre; le calcul nécessite alors $n^2$ coups d'horloge.

Mais en variante, on peut calculer les monômes de la façon suivante : on place en mémoire deux copies de la suite courante de valeurs des variables $(x_1, x_2, ..., x_n)$. En calculant les termes "en regard", on obtient d'abord les *n* carrés $x_i^2$. Ensuite, on applique une permutation circulaire d'une position à l'une des suites de valeurs des variables $(x_1, x_2, ..., x_n)$; en calculant à nouveau les termes "en regard", on obtient les *n* produits $x_1 x_2, x_2 x_3, ..., x_n x_1$. On continue ce processus de calcul des monômes *n* par *n* jusqu'à ce qu'on obtienne les $n^2$ produits. Au final, il n'aura fallu (la multiplication étant commutative) que n/2 coups d'horloge, mais ce dispositif requiert deux fois plus de mémoire que dans la mise en oeuvre "naïve".

Enfin, on pourra également gagner en rapidité, et économiser en capacité de mémoire, en combinant la génération des coefficients dans le module (300) avec la génération des monômes dans le module (200), de manière à calculer chaque terme du même type "en parallèle" pour tous les polynômes, avant de passer au terme suivant. Ainsi, dans le cas, par exemple, d'un système de polynômes quadratiques, on calculera le monôme correspondant (respectivement du type $x_i x_j$, $x_j$ ou 1) dû aux variables, puis, successivement pour les $m$ polynômes, on engendrera le coefficient de ce terme (respectivement du type $\alpha_k^{(ij)}$, $\beta_k^{(j)}$ ou $\gamma_k$) et on multipliera ce coefficient par ledit monôme pour obtenir la valeur dudit terme.

**Revendications**

1. Dispositif cryptographique de génération de suite pseudo-aléatoire de termes appartenant à un corps fini $K$ de cardinal $q \geq 2$, ledit dispositif comprenant :

   - des moyens pour calculer itérativement un système ($\Gamma$) de $m$ polynômes à $n$ variables appartenant à un corps fini $K$, **caractérisé en ce que** les coefficients desdits $m$ polynômes sont régénérés à chaque itération.

2. Dispositif selon la revendication 1, **caractérisé en ce que** chacun desdits polynômes formant le système ($\Gamma$) est de degré au plus égal à deux.

3. Dispositif selon la revendication 1 ou la revendication 2, **caractérisé en ce qu'**il comprend un module (300) de génération des coefficients réalisé sous la forme d'un registre à décalage linéaire.

4. Dispositif selon la revendication 1 ou la revendication 2, **caractérisé en ce qu'**il comprend un module (300) de génération des coefficients réalisé sous la forme d'un registre à décalage non linéaire.

5. Dispositif selon la revendication 1 ou la revendication 2, **caractérisé en ce qu'**il comprend un module (300) de génération des coefficients réalisé sous la forme d'une machine à états finis.

6. Dispositif selon l'une quelconque des revendications 1 à 5, **caractérisé en ce que**, pour calculer le $m$-uplet de valeurs ($y_1, y_2, ..., y_m$) prises, pour un $n$-uplet de variables ($x_1, x_2, ..., x_n$) donné, par les $m$ polynômes d'un système ($\Gamma$) dans lequel ces polynômes sont tous de degré global inférieur ou égal à $D$, le dispositif comprend des moyens pour :

   - choisir un ordre de traitement pour un ensemble choisi de termes du polynôme général à $n$ variables de degré $D$,
   - pour les termes traités, calculer, en respectant ledit ordre, le monôme dû aux variables, puis, successivement pour les $m$ polynômes, engendrer le coefficient de ce terme et multiplier ce coefficient par ledit monôme pour obtenir la valeur dudit terme.

7. Circuit électronique, **caractérisé en ce qu'**il comprend un dispositif cryptographique de génération de suite pseudo-aléatoire selon l'une quelconque des revendications 1 à 6.

8. Circuit électronique selon la revendication 7, **caractérisé en ce qu'**il est constitué par une puce à logique câblée.

9. Procédé pour engendrer une suite pseudo-aléatoire de termes appartenant à un corps fini $K$ de cardinal $q \geq 2$ à l'aide d'un dispositif cryptographique, ledit procédé comprenant l'étape suivante réalisée par le dispositif :

   - calcul itératif d'un système ($\Gamma$) de $m$ polynômes à $n$ variables appartenant à un corps fini $K$, **caractérisé en ce que** les coefficients desdits $m$ polynômes sont régénérés à chaque itération.

10. Procédé selon la revendication 9, **caractérisé en ce que** chacun desdits polynômes formant le système ($\Gamma$) est de degré au plus égal à deux.

11. Procédé selon la revendication 9 ou la revendication 10, **caractérisé en ce que**, pour calculer le $m$-uplet de valeurs

$(y_1,y_2,...,y_m)$ prises, pour un $n$-uplet de variables $(x_1,x_2,...,x_n)$ donné, par les $m$ polynômes d'un système ($\Gamma$) dans lequel ces polynômes sont tous de degré global inférieur ou égal à $D$, il comprend les étapes suivantes :

- le dispositif choisit un ordre de traitement pour un ensemble choisi de termes du polynôme général à $n$ variables de degré $D$,
- pour les termes traités, le dispositif calcule, en respectant ledit ordre, le monôme dû aux variables, puis, successivement pour les $m$ polynômes, le disposisitf engendre le coefficient de ce terme et le dispositif multiplie ce coefficient par ledit monôme pour obtenir la valeur dudit terme.

**12.** Moyen de stockage de données inamovible comportant des instructions de code de programme informatique pour l'exécution des étapes d'un procédé selon l'une quelconque des revendications 9 à 11.

**13.** Moyen de stockage de données partiellement ou totalement amovible, comportant des instructions de code de programme informatique pour l'exécution des étapes d'un procédé selon l'une quelconque des revendications 9 à 11.

**14.** Programme d'ordinateur contenant des instructions telles que, lorsque ledit programme commande un dispositif de traitement de données programmable, lesdites instructions font que ledit dispositif de traitement de données met en oeuvre un procédé selon l'une quelconque des revendications 9 à 11.

**Claims**

**1.** Cryptographic device for generating a pseudo-random sequence of terms belonging to a finite field K of cardinal q $\geq$ 2, said device comprising:

- means for iteratively calculating a system ($\Gamma$) of $m$ polynomials with $n$ variables belonging to a finite field K, **characterized in that** the coefficients of said $m$ polynomials are regenerated at each iteration.

**2.** Device according to Claim 1, **characterized in that** each of said polynomials forming the system ($\Gamma$) is of degree at most equal to two.

**3.** Device according to Claim 1 or Claim 2, **characterized in that** it comprises a module (300) for generating the coefficients, embodied in the form of a linear shift register.

**4.** Device according to Claim 1 or Claim 2, **characterized in that** it comprises a module (300) for generating the coefficients, embodied in the form of a non-linear shift register.

**5.** Device according to Claim 1 or Claim 2, **characterized in that** it comprises a module (300) for generating the coefficients, embodied in the form of a finite state machine.

**6.** Device according to any one of Claims 1 to 5, **characterized in that**, to calculate the $m$-tuple of values $(y_1,y_2,...,y_m)$ taken, for a given n-tuple of variables $(x_1,x_2,...,x_n)$, by the $m$ polynomials of a system ($\Gamma$) in which these polynomials are all of global degree less than or equal to D, the device comprises means for:

- choosing an order of processing for a chosen set of terms of the general polynomial with $n$ variables of degree D,
- for the processed terms, calculating, while adhering to said order, the monomial due to the variables, and then, successively for the $m$ polynomials, generating the coefficient of this term and multiplying this coefficient by said monomial to obtain the value of said term.

**7.** Electronic circuit, **characterized in that** it comprises a cryptographic device for generating a pseudo-random sequence according to any one of Claims 1 to 6.

**8.** Electronic circuit according to Claim 7, **characterized in that** it consists of a microchip with hard-wired logic.

**9.** Method for generating a pseudo-random sequence of terms belonging to a finite field K of cardinal q $\geq$ 2 with the aid of a cryptographic device, said method comprising the following step carried out by the device:

- iterative calculation of a system ($\Gamma$) of $m$ polynomials with $n$ variables belonging to a finite field K, **characterized**

**in that** the coefficients of said $m$ polynomials are regenerated at each iteration.

10. Method according to Claim 9, **characterized in that** each of said polynomials forming the system ($\Gamma$) is of degree at most equal to two.

11. Method according to Claim 9 or Claim 10, **characterized in that**, to calculate the $m$-tuple of values $(y_1, y_2, ..., y_m)$ taken, for a given $n$-tuple of variables $(x_1, x_2, ..., x_n)$, by the $m$ polynomials of a system ($\Gamma$) in which these polynomials are all of global degree less than or equal to D, it comprises the following steps:

- the device chooses an order of processing for a chosen set of terms of the general polynomial with $n$ variables of degree D,
- for the processed terms, the device calculates, while adhering to said order, the monomial due to the variables, and then, successively for the $m$ polynomials, the device generates the coefficient of this term and the device multiplies this coefficient by said monomial to obtain the value of said term.

12. Irremovable means for storing data comprising computerized program code instructions for the execution of the steps of a method according to any one of Claims 9 to 11.

13. Partially or totally removable means for storing data, comprising computerized program code instructions for the execution of the steps of a method according to any one of Claims 9 to 11.

14. Computer program containing instructions such that, when said program controls a data processing programmable device, said instructions cause said data processing device to implement a method according to any one of Claims 9 to 11.

**Patentansprüche**

1. Verschlüsselungsvorrichtung zur Erzeugung einer pseudozufälligen Folge von Gliedern, die zu einem endlichen Körper $K$ der Kardinalzahl $q \geq 2$ gehören, wobei die Vorrichtung enthält:

- Einrichtungen zur iterativen Berechnung eines Systems ($\Gamma$) von $m$ Polynomen mit $n$ Variablen, die zu einem endlichen Körper $K$ gehören,
**dadurch gekennzeichnet, dass** die Koeffizienten der $m$ Polynome bei jeder Iteration regeneriert werden.

2. Vorrichtung nach Anspruch 1, **dadurch gekennzeichnet, dass** jedes der das System ($\Gamma$) bildenden Polynome der Ordnung höchstens gleich zwei ist.

3. Vorrichtung nach Anspruch 1 oder Anspruch 2, **dadurch gekennzeichnet, dass** sie ein Modul (300) zur Erzeugung der Koeffizienten enthält, das in Form eines linearen Schieberegisters hergestellt ist.

4. Vorrichtung nach Anspruch 1 oder Anspruch 2, **dadurch gekennzeichnet, dass** sie ein Modul (300) zur Erzeugung der Koeffizienten enthält, das in Form eines nicht linearen Schieberegisters hergestellt ist.

5. Vorrichtung nach Anspruch 1 oder Anspruch 2, **dadurch gekennzeichnet, dass** sie ein Modul (300) zur Erzeugung der Koeffizienten enthält, das in Form einer Maschine mit endlichen Zuständen hergestellt ist.

6. Vorrichtung nach einem der Ansprüche 1 bis 5, **dadurch gekennzeichnet, dass**, um das $m$-Tupel von Werten $(y_1, y_2, ..., y_m)$ zu berechnen, die für ein gegebenes $n$-Tupel von Variablen $(x_1, x_2, ...x_n)$ von den $m$ Polynomen eines Systems ($\Gamma$) angenommen werden, bei dem die Polynome alle von einer globalen Ordnung geringer als oder gleich $D$ sind, die Vorrichtung Einrichtungen enthält, um:

- eine Behandlungsreihenfolge für eine ausgewählte Einheit von Gliedern des allgemeinen Polynoms mit $n$ Variablen der Ordnung $D$ auszuwählen,
- für die behandelten Glieder, unter Berücksichtigung der Reihenfolge, das Monom aufgrund der Variablen zu berechnen, dann nacheinander für die $m$ Polynome den Koeffizienten dieses Glieds zu erzeugen und diesen Koeffizienten mit dem Monom zu multiplizieren, um den Wert des Glieds zu erhalten.

**7.** Elektronische Schaltung, **dadurch gekennzeichnet, dass** sie eine Verschlüsselungsvorrichtung zur Erzeugung einer pseudozufälligen Folge nach einem der Ansprüche 1 bis 6 aufweist.

**8.** Elektronische Schaltung nach Anspruch 7, **dadurch gekennzeichnet, dass** sie aus einem Chip mit verkabelter Logik besteht.

**9.** Verfahren, um mit Hilfe einer Verschlüsselungsvorrichtung eine pseudozufällige Folge von Gliedern zu erzeugen, die zu einem endlichen Körper $K$ einer Kardinalzahl $q \geq 2$ gehören, wobei das Verfahren den folgenden durch die Vorrichtung durchgeführten Schritt enthält:

- iterative Berechnung eines Systems ($\Gamma$) von $m$ Polynomen mit $n$ Variablen, die zu einem endlichen Körper $K$ gehören,
**dadurch gekennzeichnet, dass** die Koeffizienten der $m$ Polynome bei jeder Iteration regeneriert werden.

**10.** Verfahren nach Anspruch 9, **dadurch gekennzeichnet, dass** jedes der das System ($\Gamma$) formenden Polynome der Ordnung höchstens gleich zwei ist.

**11.** Verfahren nach Anspruch 9 oder Anspruch 10, **dadurch gekennzeichnet, dass** es zur Berechnung des $m$-Tupel von Werten ($y_1, y_2, ..., y_m$), die für ein gegebenes $n$-Tupel von Variablen ($x_1, x_2, ...x_n$) von den $m$ Polynomen eines Systems ($\Gamma$) angenommen werden, bei dem die Polynome alle von einer globalen Ordnung geringer als oder gleich $D$ sind, die folgenden Schritte enthält:

- die Vorrichtung wählt eine Behandlungsreihenfolge für eine ausgewählte Einheit von Gliedern des allgemeinen Polynoms mit $n$ Variablen der Ordnung D,
- für die behandelten Glieder berechnet die Vorrichtung unter Berücksichtigung der Reihenfolge das Monom aufgrund der Variablen, dann erzeugt die Vorrichtung nacheinander für die $m$ Polynome den Koeffizienten dieses Glieds, und die Vorrichtung multipliziert diesen Koeffizienten mit dem Monom, um den Wert des Glieds zu erhalten.

**12.** Nicht entfernbare Datenspeichereinrichtung, die Codeanweisungen eines EDV-Programms für die Ausführung der Schritte eines Verfahrens nach einem der Ansprüche 9 bis 11 aufweist.

**13.** Teilweise oder ganz entfernbare Datenspeichereinrichtung, die Codeanweisungen eines EDV-Programms für die Ausführung der Schritte eines Verfahrens nach einem der Ansprüche 9 bis 11 aufweist.

**14.** Computerprogramm, das derartige Anweisungen enthält, dass, wenn das Programm eine programmierbare Einrichtung zur Datenverarbeitung steuert, die Anweisungen bewirken, dass die Datenverarbeitungsvorrichtung ein Verfahren nach einem der Ansprüche 9 bis 11 anwendet.

FIG. 1

**FIG. 2**

# EP 2 005 290 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0506041

**Littérature non-brevet citée dans la description**

- **T. Dierks ; C. Allen.** *The TLS Protoco/, version 1.0, RFC 2246,* Janvier 1999
- Linear Statistical Weakness of Alleged RC4 Keystream Generator. **J.D. Golic.** Actes de ''Advances in Cryptology - EUROCRYPT '97'', pages 226 à 238, éditeur W. Fumy, Lecture Notes in Computer Science. Springer-Verlag, vol. 1233, 226-238
- Real Time Cryptanalysis of A5/1 on a PC. **A. Biryukov ; A. Shamir ; D. Wagner.** Actes de ''FSE 2000''. Springer Verlag, 2000, 1-18
- **A. Canteaut.** Le chiffrement à la volée'', dossier hors-série du magazine. *Pour la Science,* Juillet 2002, 86, 87
- **P.L'Ecuyer.** A Tutorial On Uniform Variate Generation. *Proceedings of the 1989 Winter Simulation Conference,* 04 Décembre 1989, 40-49
- Public Quadratic Polynomialtuples for Efficient Signature-Verification and Message-Encryption. **Tsutomu Matsumoto et al.** Advances in Cryptology- Eurocrypt International Conference on the Theory and Application of Cryptographyc Techniques. Springer Verlag, 25 Mai 1988, 419-453
- Generating Uniform Random Numbers. **Knuth D.E.** Seminumerical Algorithms, Art of Computer Programming, Reading. Addison Wesley, 1980, vol. 2, 9-37